# EUROPEAN PATENT APPLICATION

(11) **EP 4 231 244 A1**
(43) Date of publication of application: **23.08.2023**
(21) Application number: 21891183.2
(22) Date of filing: 11.11.2021
(51) Int. Cl.: G06T 15/20

(54) **METHOD, APPARATUS AND DEVICE FOR SELECTING ANTI-ALIASING ALGORITHM AND READABLE STORAGE MEDIUM**

(30) Priority: 13.11.2020 CN 202011273391
(71) Applicant: Huawei Technologies Co., Ltd., Shenzhen, Guangdong 518129 (CN)
(72) Inventor: JIANG, Zecheng, Shenzhen, Guangdong 518129 (CN); YAN, Jin, Shenzhen, Guangdong 518129 (CN); LUO, Bei, Shenzhen, Guangdong 518129 (CN)
(74) Representative: Goddar, Heinz J.
(86) International application number: PCT/CN2021/130070
(87) International publication number: WO 2022/100663

(57) **Abstract**

An anti-aliasing algorithm selection method and apparatus, a device, and a readable storage medium are provided, to dynamically select an anti-aliasing algorithm suitable for a current image scene, thereby improving anti-aliasing effect and image quality. The method includes: A CPU obtains at least one instruction used to call an application program interface API, where the at least one instruction carries respective rendering information of M models, the M models belong to a same frame of image, and M is a positive integer; then the CPU selects, based on the respective rendering information of the M models, an anti-aliasing algorithm from a plurality of anti-aliasing algorithms as a target anti-aliasing algorithm; and the CPU sends indication information to a graphics processing unit GPU, so that the GPU renders at least one frame of image according to the target anti-aliasing algorithm.

## Description

This application claims priority to Chinese Patent Application No. 202011273391.6, filed on November 13, 2020 and entitled "ANTI-ALIASING ALGORITHM SELECTION METHOD AND APPARATUS, DEVICE, AND READABLE STORAGE MEDIUM", which is incorporated herein by reference in its entirety.

### TECHNICAL FIELD

Embodiments of this application relate to the field of computer technologies, and in particular, to an anti-aliasing algorithm selection method and apparatus, a device, and a readable storage medium.

### BACKGROUND

In the signal processing and related fields, aliasing (Aliasing) is a phenomenon that when different signals are sampled, sampling results show a same signal.

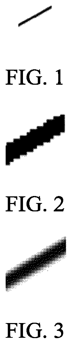

In the image field, the aliasing may include geometric aliasing, shading aliasing, and time aliasing. The geometric aliasing is used as an example, and is usually represented as jagged edges. A jagged edge indicates that there are jaggies on an edge of an image displayed on a display, for example, as shown in a straight line in FIG. 1. The straight line shown in FIG. 1 is zoomed in, and a zoomed-in straight line image is shown in FIG. 2. It can be seen that there are jaggies on both sides of the straight line.

An anti-aliasing (Anti-Aliasing, AA) technology is introduced because the jagged edges affect display effect of an image. Anti-aliasing may also be referred to as anti-sampling edge softening, aliasing eliminating, anti-image folding distortion, and the like, and is a technology that can eliminate jaggies on an edge of an image. For example, if the anti-aliasing technology is used in a process of rendering a straight line, a display result of the straight line is shown in FIG. 3. It can be learned through comparison of FIG. 2 and FIG. 3 that the anti-aliasing technology softens the jaggies, so that the straight line is displayed more smoothly.

There are a plurality of anti-aliasing algorithms. However, in an existing game, a fixed anti-aliasing algorithm is usually selected to perform anti-aliasing on all images in the game. Anti-aliasing algorithms are applicable to different scenes. Therefore, if a fixed anti-aliasing algorithm is used for processing, anti-aliasing effect of some images is poor.

### SUMMARY

Embodiments of this application provide an anti-aliasing algorithm selection method and apparatus, a device, and a readable storage medium. This method can be used to dynamically select an anti-aliasing algorithm suitable for a current image scene, thereby improving anti-aliasing effect and image quality.

According to a first aspect, an embodiment of this application provides an anti-aliasing algorithm selection method, which is applied to a central processing unit CPU, and includes: obtaining at least one instruction used to call an application program interface API, where the at least one instruction carries respective rendering information of M models, the rendering information includes but is not limited to vertex data, an identifier of a model, an ID of a VBO corresponding to the model, and an ID of an EBO corresponding to the model, the M models belong to a same frame of image, and M is a positive integer; selecting, based on the respective rendering information of the M models, an anti-aliasing algorithm from a plurality of anti-aliasing algorithms as a target anti-aliasing algorithm, where the plurality of anti-aliasing algorithms may include at least two of an SSAA algorithm, an MSAA algorithm, a CSAA algorithm, a CFAA algorithm, an FXAA algorithm, a TXAA algorithm, and a DLAA algorithm; and sending indication information to a graphics processing unit GPU, where the indication information indicates the GPU to render at least one frame of image according to the target anti-aliasing algorithm.

It should be understood that the "at least one frame of image" to which the selected anti-aliasing algorithm is applied may include the frame to which the M models belong. Alternatively, the selected anti-aliasing algorithm may not be applied in a timely manner to the frame to which the M models belong, but is applied to one or more frames following this frame.

Because the M models belong to the same frame of image, the respective rendering information of the M models can reflect a specific scene of the frame of image. Therefore, determining the target anti-aliasing algorithm based on the respective rendering information of the M models can implement dynamic selection of the target anti-aliasing algorithm, and obtain the target anti-aliasing algorithm applicable to a current image scene, to improve anti-aliasing effect and image quality.

In an implementation, the plurality of anti-aliasing algorithms include a fast approximate anti-aliasing FXAA algorithm. Correspondingly, the selecting, based on the respective rendering information of the M models, an anti-aliasing algorithm from a plurality of anti-aliasing algorithms as a target anti-aliasing algorithm includes: determining, from the M models, N models whose rendering information includes texture information, where the texture information indicates that texture data is used in a model rendering process, and N is a positive integer less than or equal to M; calculating respective vertex multiplicities of the N models, where the vertex multiplicity may be represented by a quantity of times of vertex reusing, or may be represented by a total quantity of vertices and the quantity of times of vertex reusing, specifically, the vertex multiplicity may be equal to a proportion of a quantity of times of vertex reusing in a model to a sum, and the sum is a sum of the total quantity of vertices and the quantity of times of vertex reusing; and selecting, based on that K models that are in the N models and whose vertex multiplicities are less than a target multiplicity meet a condition, the FXAA algorithm as the target anti-aliasing algorithm, where the condition may have a plurality of types of content, for example, may include a threshold for a quantity of models, and K is a positive integer less than or equal to N.

The FXAA algorithm is applicable to a rendering process of a model that is drawn through texture mapping and that has a low vertex multiplicity. Therefore, in this implementation, the N models that are drawn through texture mapping are first obtained by screening from the M models. Then, the K models whose vertex multiplicities are less than the target multiplicity are obtained by screening from the N models. Finally, when the K models meet a target condition, the FXAA algorithm is selected, to ensure that the FXAA algorithm is applicable to a scene of the image to which the M models belong.

In an implementation, the condition includes that a proportion of a projected area of the K models in screen space to a screen area is greater than a target proportion. A value of the target proportion may be set based on experience, a type of a game application, and a specific game scene. For example, the target proportion may be configured as 1/3, 2/5, or 1/2.

This implementation provides another example of the condition. The FXAA algorithm is applicable to the rendering process of the model that is drawn through texture mapping and that has the low vertex multiplicity. Therefore, when the K models that are drawn through texture mapping and that have low vertex multiplicities account for a large proportion in the screen area, the FXAA algorithm is selected as the target anti-aliasing algorithm, to ensure good anti-aliasing effect in a current frame of image.

In an implementation, after the calculating respective vertex multiplicities of the N models, and before the selecting, based on that K models that are in the N models and whose vertex multiplicities are less than a target multiplicity meet a condition, the FXAA algorithm as the target anti-aliasing algorithm, the method further includes: calculating the proportion of the projected area of the K models in the screen space to the screen area. There are a plurality of methods for calculating the proportion.

The proportion of the projected area of the K models in the screen space to the screen area is calculated. When the proportion is greater than the target proportion, the FXAA algorithm is selected as the target anti-aliasing algorithm, to ensure good anti-aliasing effect in the current frame of image.

In an implementation, the calculating the proportion of the projected area of the K models in the screen space to the screen area includes: obtaining P bounding boxes bounding the K models, where each bounding box is a geometry bounding at least one of the K models, one bounding box may correspond to one model, or may correspond to a plurality of models, and the bounding boxes may have a plurality of shapes, for example, a cuboid, a cube, or a sphere; calculating, based on a transformation matrix, a projected area of the P bounding boxes in the screen space, where the transformation matrix is used to project the P bounding boxes from model space to the screen space, and different bounding boxes may correspond to different transformation matrices; and calculating a proportion of the projected area of the P bounding boxes in the screen space to the screen area, and using the proportion of the projected area of the P bounding boxes in the screen space to the screen area as the proportion of the projected area of the K models in the screen space to the screen area.

Because a model is usually an irregular geometry, if a proportion of a projected area of the model in the screen space to the screen area is directly calculated, a calculation process is complex. Therefore, in this implementation, the P bounding boxes bounding the K models are first obtained, and then the proportion of the projected area of the P bounding boxes in the screen space to the screen area is calculated, and the proportion of the projected area of the P bounding boxes in the screen space to the screen area is used as an approximate value of the proportion of the projected area of the K models in the screen space to the screen area. This can simplify a proportion calculation process and improve proportion calculation effect, thereby improving efficiency of determining the target anti-aliasing algorithm.

In an implementation, the respective rendering information of the M models further includes respective vertex buffer objects VBOs corresponding to the M models. Correspondingly, the obtaining P bounding boxes bounding the K models includes: obtaining, from respective vertex buffer objects VBOs corresponding to the K models, respective vertex data corresponding to the K models, where the vertex data may include vertex coordinates and a vertex normal vector; and determining the P bounding boxes based on the respective vertex data corresponding to the K models. Specifically, a maximum coordinate value and a minimum coordinate value corresponding to each model in each direction may be determined based on respective vertex coordinates of the K models, and then the P bounding boxes are determined.

In this implementation, the P bounding boxes are determined based on the respective vertex data corresponding to the K models, so that a volume of the determined bounding box does not greatly differ from an actual volume of the model. In this way, the proportion of the projected area of the P bounding boxes in the screen space to the screen area may be approximately equal to the proportion of the projected area of the K models in the screen space to the screen area, thereby ensuring accuracy of the condition. Therefore, the selected FXAA algorithm is applicable to the scene of the image to which the M models belong.

In an implementation, the N models include a target model, and rendering information of the target model further includes an element buffer object EBO corresponding to the target model. Correspondingly, the calculating respective vertex multiplicities of the N models includes: obtaining, from the EBO corresponding to the target model, a quantity of vertex indexes and a quantity of vertex index key values corresponding to the target model, where the vertex index may be understood as an index of a storage location of a vertex, and the vertex index key value is a value of the index; and calculating a vertex multiplicity of the target model based on the quantity of vertex indexes and the quantity of vertex index key values, where the vertex multiplicity of the target model is a proportion of a target difference to the quantity of vertex indexes, and the target difference is equal to a difference between the quantity of vertex indexes and the quantity of vertex index key values.

Compared with calculating a vertex multiplicity based on vertex data, calculating a vertex multiplicity based on a quantity of vertex indexes and a quantity of vertex index key values has a smaller calculation amount and a simplified calculation process, thereby improving efficiency of selecting a target anti-aliasing algorithm.

In an implementation, the M models are all models in an image to which the M models belong, and the plurality of anti-aliasing algorithms further include a multisampling anti-aliasing MSAA algorithm. The selecting, based on the respective rendering information of the M models, an anti-aliasing algorithm from a plurality of anti-aliasing algorithms as a target anti-aliasing algorithm further includes: selecting, based on that K models that are in the N models and whose vertex multiplicities are less than a target multiplicity do not meet the condition, the MSAA algorithm as the target anti-aliasing algorithm, where K is a positive integer less than or equal to N.

The FXAA algorithm and the MSAA algorithm are two anti-aliasing algorithms with high applicability. Therefore, in this implementation, whether the FXAA algorithm is applicable to the scene of the current image is first determined based on the rendering information of the M models. If the FXAA algorithm is applicable, the FXAA algorithm is selected as the target anti-aliasing algorithm; or if the FXAA algorithm is not applicable, the MSAA algorithm is selected as the target anti-aliasing algorithm. The FXAA algorithm and MSAA algorithm can be continually switched based on different scenes to improve anti-aliasing effect of game applications.

In an implementation, before the selecting, based on that K models that are in the N models and whose vertex multiplicities are less than a target multiplicity meet a condition, the FXAA algorithm as the target anti-aliasing algorithm, the method further includes: obtaining a plurality of frames of images in a plurality of specific scenes, where each specific scene may be set based on a type of a game application and corresponds to at least one frame of image, and the plurality of specific scenes may include all main scenes in the game application; calculating a vertex multiplicity of at least one specific model in the plurality of frames of images, where the at least one specific model may be a model applicable to the FXAA algorithm, for example, may be a model drawn through texture mapping, or may be a model with a low vertex multiplicity; and determining the target multiplicity based on the vertex multiplicity of the at least one specific model.

A plurality of frames of images in a specific scene are selected, so that the determined target multiplicity is applicable to selection of the target anti-aliasing algorithm in all scenes of the game application. In addition, the target multiplicity is determined based on the vertex multiplicity of the at least one specific model in the plurality of frames of images. For example, when the at least one specific model is applicable to a model of the FXAA algorithm, the finally determined target multiplicity may be used for selection of the FXAA algorithm.

According to a second aspect, an embodiment of this application provides an anti-aliasing algorithm selection apparatus, including:
an obtaining unit, configured to obtain at least one instruction used to call an application program interface API, where the at least one instruction carries respective rendering information of M models, the M models belong to a same frame of image, and M is a positive integer;
a selection unit, configured to: select, based on the respective rendering information of the M models, an anti-aliasing algorithm from a plurality of anti-aliasing algorithms as a target anti-aliasing algorithm; and
a sending unit, configured to send indication information to a graphics processing unit GPU, where the indication information indicates the GPU to render at least one frame of image according to the target anti-aliasing algorithm.

In an implementation, the plurality of anti-aliasing algorithms include a fast approximate anti-aliasing FXAA algorithm. The selection unit is configured to: determine, from the M models, N models whose rendering information includes texture information, where the texture information indicates that texture data is used in a model rendering process, and N is a positive integer less than or equal to M; calculate respective vertex multiplicities of the N models; and select, based on that K models that are in the N models and whose vertex multiplicities are less than a target multiplicity meet a condition, the FXAA algorithm as the target anti-aliasing algorithm, where K is a positive integer less than or equal to N.

In an implementation, the condition includes that a proportion of a projected area of the K models in screen space to a screen area is greater than a target proportion.

In an implementation, the selection unit is further configured to calculate the proportion of the projected area of the K models in the screen space to the screen area.

In an implementation, the selection unit is configured to: obtain P bounding boxes bounding the K models, where each bounding box is a geometry bounding at least one of the K models; calculate, based on a transformation matrix, a projected area of the P bounding boxes in the screen space, where the transformation matrix is used to project the P bounding boxes from model space to the screen space; and calculate a proportion of the projected area of the P bounding boxes in the screen space to the screen area, and use the proportion of the projected area of the P bounding boxes in the screen space to the screen area as the proportion of the projected area of the K models in the screen space to the screen area.

In an implementation, the respective rendering information of the M models further includes respective vertex buffer objects VBOs corresponding to the M models; and the selection unit is configured to: obtain, from respective vertex buffer objects VBOs corresponding to the K models, respective vertex data corresponding to the K models; and determine the P bounding boxes based on the respective vertex data corresponding to the K models.

In an implementation, the N models include a target model, and rendering information of the target model further includes an element buffer object EBO corresponding to the target model. The selection unit is configured to: obtain, from the EBO corresponding to the target model, a quantity of vertex indexes and a quantity of vertex index key values corresponding to the target model; and calculate a vertex multiplicity of the target model based on the quantity of vertex indexes and the quantity of vertex index key values, where the vertex multiplicity of the target model is a proportion of a target difference to the quantity of vertex indexes, and the target difference is equal to a difference between the quantity of vertex indexes and the quantity of vertex index key values.

In an implementation, the M models are all models in an image to which the M models belong, and the plurality of anti-aliasing algorithms further include a multisampling anti-aliasing MSAA algorithm. The selection unit is further configured to: select, based on that K models that are in the N models and whose vertex multiplicities are less than a target multiplicity do not meet the condition, the MSAA algorithm as the target anti-aliasing algorithm, where K is a positive integer less than or equal to N.

In an implementation, the apparatus further includes a determining unit, configured to: obtain a plurality of frames of images in a plurality of scenes, where each scene corresponds to at least one frame of image; calculate a vertex multiplicity of at least one model in the plurality of frames of images; and determine the target multiplicity based on the vertex multiplicity of the at least one model.

For specific implementations, related descriptions, and technical effect of the foregoing units, refer to descriptions in the first aspect of embodiments of this application.

According to a third aspect, an embodiment of this application provides a terminal device, including: one or more processors and a memory. The memory stores computer-readable instructions, and the one or more processors read the computer-readable instructions, to enable a computer device to implement the method according to any one of the implementations of the first aspect.

According to a fourth aspect, an embodiment of this application provides a computer-readable storage medium, including computer-readable instructions. When the computer-readable instructions are run on a computer, the computer is enabled to perform the method according to any one of the implementations of the first aspect.

According to a fifth aspect, an embodiment of this application provides a chip, including one or more processors. Some or all of the processors are configured to read and execute a computer program stored in a memory, to perform the method according to any possible implementation of the first aspect.

Optionally, the chip includes the memory, and the memory and the processor are connected to the memory by using a circuit or a wire. Further, optionally, the chip further includes a communication interface, and the processor is connected to the communication interface. The communication interface is configured to receive data or information or both that need to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of this application may be implemented by one chip, or may be cooperatively implemented by a plurality of chips.

According to a sixth aspect, an embodiment of this application provides a computer program product. The computer program product includes computer software instructions, and the computer software instructions may be loaded by a processor to implement the method according to any one of the implementations of the first aspect.

According to the foregoing technical solutions, it can be learned that embodiments of this application have the following advantages:
obtaining at least one instruction used to call an application program interface API, where the at least one instruction carries respective rendering information of M models, the M models belong to a same frame of image, and M is a positive integer; selecting, based on the respective rendering information of the M models, an anti-aliasing algorithm from a plurality of anti-aliasing algorithms as a target anti-aliasing algorithm; and sending indication information to a graphics processing unit GPU, where the indication information indicates the GPU to render at least one frame of image according to the target anti-aliasing algorithm.

Because the M models belong to the same frame of image, the respective rendering information of the M models can reflect a specific scene of the frame of image. Therefore, determining the target anti-aliasing algorithm based on the respective rendering information of the M models can implement dynamic selection of the target anti-aliasing algorithm, and obtain the target anti-aliasing algorithm applicable to a current image scene, to improve anti-aliasing effect and image quality.

### BRIEF DESCRIPTION OF DRAWINGS

FIG. 1 is a schematic diagram of an image of a straight line without anti-aliasing;
FIG. 2 is a schematic diagram of an image obtained after the straight line in FIG. 1 is zoomed in;
FIG. 3 is a schematic diagram of an image of a straight line after anti-aliasing;
FIG. 4 is a schematic diagram of a system framework according to an embodiment of this application;
FIG. 5 is a schematic diagram of a display setting interface including an anti-aliasing switch option;
FIG. 6 is a schematic diagram of an embodiment of an anti-aliasing algorithm selection method according to an embodiment of this application;
FIG. 7 is a schematic diagram of another embodiment of an anti-aliasing algorithm selection method according to an embodiment of this application;
FIG. 8 is a schematic diagram of a model according to an embodiment of this application;
FIG. 9 is a schematic diagram of a grass model according to an embodiment of this application;
FIG. 10 is a schematic diagram of a human model according to an embodiment of this application;
FIG. 11 is a schematic diagram of a shoes model according to an embodiment of this application;
FIG. 12 is a schematic diagram of calculating a proportion of a projected area of K models to a screen area according to an embodiment of this application;
FIG. 13 is a schematic diagram of an embodiment of a bounding box according to an embodiment of this application;
FIG. 14 is a schematic diagram of another embodiment of a bounding box according to an embodiment of this application;
FIG. 15 is a schematic diagram of an application example according to an embodiment of this application;
FIG. 16 is a schematic diagram of first anti-aliasing effect in a first scene according to an embodiment of this application;
FIG. 17 is a schematic diagram of second anti-aliasing effect in a first scene according to an embodiment of this application;
FIG. 18 is a schematic diagram of first anti-aliasing effect in a second scene according to an embodiment of this application;
FIG. 19 is a schematic diagram of second anti-aliasing effect in a second scene according to an embodiment of this application;
FIG. 20 is a schematic diagram of an anti-aliasing algorithm selection apparatus according to an embodiment of this application; and
FIG. 21 is a schematic diagram of a structure of a terminal device according to an embodiment of this application.

### DESCRIPTION OF EMBODIMENTS

The following describes embodiments of this application with reference to the accompanying drawings. It is clear that the described embodiments are merely some but not all of embodiments of this application. A person of ordinary skill in the art may learn that, with technology development and emergence of a new scene, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, terms "include", "contain", and any other variants mean to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, provided that same or similar technical effect can be achieved.

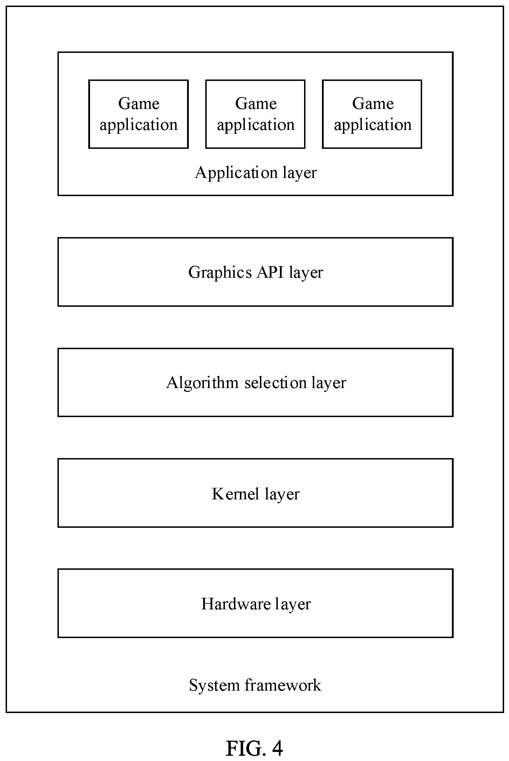

Embodiments of this application may be applied to a system frameworkshown in FIG. 4. The system framework includes an application layer, a graphics application program interface (Application Program Interface, API) layer, a kernel layer, and a hardware layer. This system framework may be used in any terminal device that can render an image. For example, terminal devices in which the system framework may be used include but are not limited to a mobile phone, a tablet computer, a notebook computer, and a vehicle-mounted computer.

As shown in FIG. 4, the application layer includes three game applications. It should be noted that, in this embodiment, the applications at the application layer are game applications, in other words, this embodiment of this application is mainly applied to an image rendering scene in games. However, in another embodiment of this application, the applications at the application layer may alternatively be other applicable applications. This is not specifically limited in this application. In addition, a quantity of game applications is not limited to three, and less or more game applications can be used.

The graphics API layer includes but is not limited to three graphics APIs: an open graphics library (Open Graphics Library, OpenGL), an OpenGL for embedded systems (OpenGL for embedded systems), and Vulkan. The graphics API layer may be configured to render a 2D or 3D scene to a screen of the terminal device. For example, the OpenGL is used to render 2D scenes, and the OpenGL ES and Vulkan are used to render 3D scenes.

The kernel layer includes a system kernel, a driver, and the like.

The hardware layer includes but is not limited to a central processing unit CPU, a graphics processing unit GPU, an internal memory, and the like. The internal memory may be a double data rate SDRAM (Double Data Rate Synchronous Dynamic Random-access Memory, DDR SDRAM), or may be another type of internal memory.

Based on the system framework shown in FIG. 4, when the game application runs, one frame of image is used as an example, and an image rendering process Pipe Line includes:
Step 1: A game engine in the game application traverses a game scene, and crops and removes an invisible object in the game scene.
Step 2: The game engine prepares a data resource corresponding to each visible object in the game scene, and sends an instruction used to call a graphics API, where the instruction used to call the graphics API reaches the kernel layer through the graphics API layer.
Step 3: After receiving the instruction used to call the graphics API, the driver of the kernel layer transfers the data resource to the internal memory of the GPU, and sends a rendering instruction to the GPU, to instruct the GPU to perform rendering.
Step 4: After receiving the rendering instruction, the GPU reads the data resource from the internal memory, and performs operations such as a vertex shader Vertex shader, a fragment shader Fragment shader, or a compute shader, to obtain a rendered frame of image.

Each object in the rendered image is a mesh mesh model, each mesh model includes a large quantity of triangles, and each triangle has three vertices. The vertices of different triangles can overlap.

The vertex shader is a program fragment that processes vertex transformation on the GPU. The vertex shader is executed once for each vertex of the mesh model.

The fragment shader is a program fragment that processes pixel shading on the GPU. After the mesh model undergoes vertex transformation, a pixel shader is executed for each pixel covered by the mesh model on the screen.

The compute shader is a program fragment that is executed on the GPU and that can be used for computing beyond image rendering. Specifically, the compute shader may be transmitted to the GPU by using the OpenGL ES API or the Vulkan API, so as to be executed by the GPU.

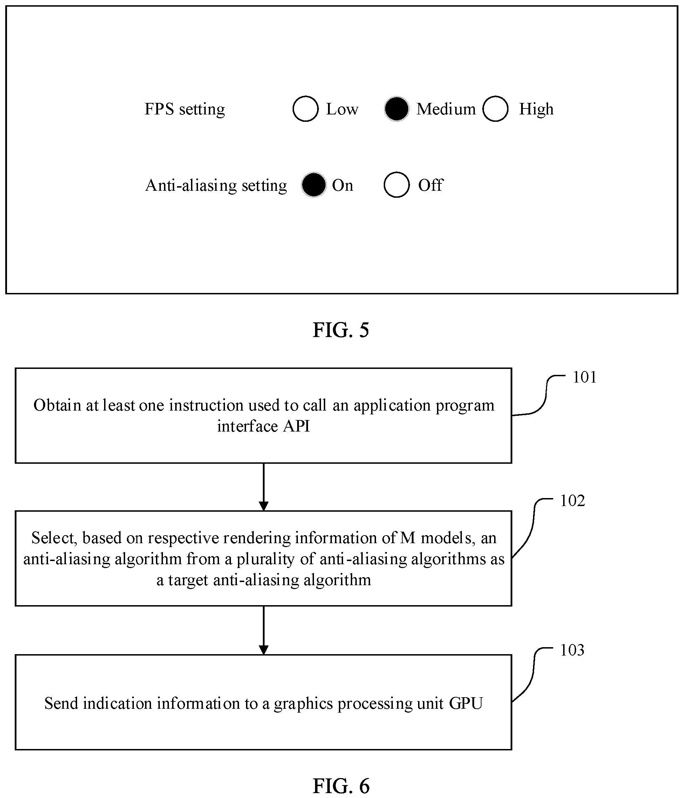

However, jagged edges exist in an image obtained by rendering, and affect display effect of the image. Therefore, in an image rendering process, anti-aliasing is performed by using an anti-aliasing technology, to reduce impact of the jagged edges on the display effect of the image and improve image quality. For example, as shown in FIG. 5, a game application provides an anti-aliasing switch option in a display setting interface, and the user may select whether to enable anti-aliasing before or during running of the game. After the user selects to enable anti-aliasing, the terminal device performs anti-aliasing by using the anti-aliasing technology in a subsequent image rendering process.

There are a plurality of anti-aliasing technologies, specially including super-sampling anti-aliasing (Super-Sampling Anti-aliasing, SSAA), multisampling anti-aliasing (Multisample Anti-Aliasing, MSAA), coverage sampling anti-aliasing (Coverage Sampling Anti-Aliasing, CSAA), custom filter anti-aliasing (Custom Filter Anti-Aliasing, CFAA), fast approximate anti-aliasing (Fast Approximate Anti-Aliasing, FXAA), and temporal anti-aliasing (Temporal Anti-Aliasing, TXAA), and Deep Learning Anti-Aliasing (DLAA).

The following describes in detail two anti-aliasing technologies with good applicability in the foregoing anti-aliasing technologies.

MSAA: The MSAA comes from the OpenGL and performs super-sampling anti-aliasing only on data in a Z-buffer (Z-Buffer) and stencil buffer (Stencil Buffer). It can be simply understood that the MSAA only performs anti-aliasing on an edge of a polygon. In this way, compared with the SSAA processing all data in the image, the MSAA greatly reduces resource consumption and can achieve better anti-aliasing effect. Therefore, the MSAA is widely applied, and almost all games support the MSAA.

FXAA: The FXAA is a post-processing (post-processing) anti-aliasing technology. Post-processing indicates processing a result after rendering of a common scene, that is, processing one or more texture images to obtain a new texture image. Therefore, the FXAA processes a preliminarily rendered image and does not depend on any graphics processing unit GPU computing interface. Therefore, the FXAA has no special requirements for graphics cards. The FXAA can obtain good anti-aliasing effect by analyzing pixels in the image, and extracting and smoothing jagged edges of the image, which only consumes a small quantity of computing resources. However, the FXAA also blurs the image and may exacerbate an edge flicker.

It can be learned based on the foregoing description that the MSAA is applicable to performing anti-aliasing on an edge of a polygon in a mesh model. Because the FXAA processes pre-rendered images, the FXAA is suitable for anti-aliasing of a texture-mapped mesh model.

Other anti-aliasing technologies, like the preceding two anti-aliasing technologies, have their own applicable scenes. The scene herein may be understood as a scene in a game. As the scene in the game continuously changes, an object type, a quantity of objects, an object rendering method, and the like in the scene change. Therefore, if only one anti-aliasing technology is used for anti-aliasing during running of the game, anti-aliasing effect becomes poor when the scene in the game becomes a scene to which the anti-aliasing technology is not applicable.

Therefore, in this embodiment of this application, an algorithm selection layer is added to the system framework shown in FIG. 4. The algorithm selection layer can obtain the instruction calling a graphics API from the graphics API layer in real time, and then extract rendering information of the mesh model from the obtained instruction calling the graphics API. Then, an anti-aliasing algorithm is dynamically selected from a plurality of anti-aliasing algorithms based on the rendering information of the mesh model, so that the selected anti-aliasing algorithm can adapt to a current scene, thereby improving the anti-aliasing effect and the image quality. An anti-aliasing algorithm may correspond to an anti-aliasing technology.

It should be noted that embodiments of this application may be applied to any terminal device to which an anti-aliasing technology can be applied, for example, may be applied to terminal devices such as a mobile phone, a tablet computer, a desktop computer, a notebook computer, and a vehicle-mounted computer.

However, because the anti-aliasing algorithm is usually performed by a GPU, and different terminal devices have different GPU architectures, adaptive adjustment may be performed when embodiments of this application is applied to different terminal devices, and a solution obtained after adaptive adjustment also falls within the protection scope of embodiments of this application.

It should be understood that a GPU architecture of a mobile terminal such as a mobile phone or a tablet computer is different from a GPU architecture of a fixed terminal such as a desktop computer. In addition, because factors such as hardware resources and power consumption need to be considered for the mobile terminal, usually only one anti-aliasing technology can be selected to perform anti-aliasing. However, because factors such as hardware resources and power consumption does not need to be considered for the fixed terminal, a plurality of anti-aliasing technologies can be selected to perform anti-aliasing simultaneously. Therefore, embodiments of this application are particularly applicable to mobile terminals such as a mobile phone and a tablet computer, and may be specifically used in a game application of the mobile terminal.

The following describes an anti-aliasing algorithm selection method provided in an embodiment of this application. For ease of description, the following uses a model to replace the mesh model.

Specifically, refer to FIG. 6. This embodiment of this application provides an embodiment of an anti-aliasing algorithm selection method. This embodiment may be applied to a central processing unit CPU. During the running of a game, this embodiment includes:
Step 101: Obtain at least one instruction used to call an application program interface API, where the at least one instruction carries respective rendering information of M models, the M models belong to a same frame of image, and M is a positive integer.

It can be learned from the related descriptions in FIG. 1 that an application sends an instruction to the graphics application program interface API, and the instruction is used to call the graphics API. However, in this embodiment of this application, the instruction may be obtained from the graphics API.

In this embodiment of this application, the at least one instruction used to call the graphics API is obtained. The at least one instruction may include one instruction, or may include a plurality of instructions.

The following describes a correspondence between the at least one instruction and the M models.

One instruction may correspond to a plurality of models. For example, one instruction may instruct to render a plurality of models of a same object. Specifically, if a current game scene includes a plurality of same trees, an instruction may be used to instruct to render models of the plurality of trees.

One model may correspond to a plurality of instructions. Generally, a plurality of instructions need to be sent in a rendering process of a model. The plurality of instructions may be classified, based on types, into a preparation instruction and a drawcall instruction.

The preparation instruction may be used to store resource data required for model rendering into a corresponding buffer (buffer). Specifically, the preparation instruction may be used to bind the model to texture data, may be used to store vertex data and the like of the model in the vertex buffer object (Vertex Buffer Object, VBO), or may be used to store a vertex index in an element buffer object (Element Buffer Object, EBO).

The VBO is a memory buffer allocated in a video card memory (video memory for short), and stores various attribute data of vertices. The data of vertices includes vertex coordinates, vertex normal vectors, and vertex color data. During rendering, the GPU can directly read various attribute data of vertices from the VBO. Because the VBO is in the video memory instead of the memory, data does not need to be transferred from the CPU, and processing efficiency is higher. A plurality of VBOs may be allocated in the video memory. Each VBO corresponds to a unique ID, and the ID corresponds to a specific video memory address. Data in a specific VBO may be accessed based on the ID.

Similar to the VBO, the EBO is also a memory buffer in the video memory, except that the EBO stores a vertex index, and the vertex index may be understood as an index of a storage location of a vertex. The EBO is equivalent to a concept of a vertex array in the OpenGL, and can resolve repeated calling of a same vertex for a plurality of times, thereby reducing a memory space waste and improving execution efficiency. When a vertex needs to be reused, the vertex index can be used to call the vertex, instead of repeatedly recording and repeatedly calling the same vertex data.

The drawcall instruction may be used to instruct the GPU to render a model. The drawcall instruction may include an identifier of the model, an ID of a VBO corresponding to the model, an ID of an EBO corresponding to the model, and the like.

Therefore, a quantity and a type of the at least one instruction and a correspondence between the at least one instruction and the M models are not specifically limited in this embodiment of this application.

Rendering information of the model may include a plurality of types of information. This is not specifically limited in this embodiment of this application. It can be learned from the foregoing description that the rendering information includes but is not limited to vertex data, an identifier of a model, an ID of a VBO corresponding to the model, and an ID of an EBO corresponding to the model.

The M models belong to a same frame of image, and this frame of image belongs to a to-be-rendered image. Therefore, rendering information of each of the M models can reflect a specific scene of this frame of image. The M models may be one model, or may include a plurality of models. The M models may be some or all of models in this frame of image.

It should be noted that a process of rendering one frame of image includes a process of rendering all models in the frame of image. Therefore, in a process of rendering one frame of image, usually dozens or even hundreds of instructions calling graphics APIs are continuously sent. Therefore, the step 101 may obtain the at least one instruction at a time. When the at least one instruction means a plurality of instructions, the step 101 may further obtain a plurality of instructions through obtaining for a plurality of times.

Step 102: Select, based on the respective rendering information of the M models, an anti-aliasing algorithm from a plurality of anti-aliasing algorithms as a target anti-aliasing algorithm.

It can be learned from the related description in the step 101 that the respective rendering information of the M models can reflect a specific scene of the to-be-rendered image to which the M models belong. Therefore, the target anti-aliasing algorithm is selected based on the respective rendering information of the M models. It may be understood that the target anti-aliasing algorithm is selected based on the specific scene of the to-be-rendered image.

Types of the plurality of anti-aliasing algorithms are not specifically limited in this embodiment of this application, and include but are not limited to at least two of an SSAA algorithm, an MSAA algorithm, a CSAA algorithm, a CFAA algorithm, an FXAA algorithm, a TXAA algorithm, and a DLAA algorithm.

Because the respective rendering information of the M models may include a plurality of types of information, target anti-aliasing algorithm selection methods also vary according to different rendering information.

Therefore, in the step 102, there are a plurality of target anti-aliasing algorithm selection methods. This is not specifically limited in this embodiment of this application.

Step 103: Send indication information to a graphics processing unit GPU, where the indication information indicates the GPU to render at least one frame of image according to the target anti-aliasing algorithm.

After the target anti-aliasing algorithm is determined, the CPU sends the indication information to the GPU, so that the GPU performs anti-aliasing according to the target anti-aliasing algorithm.

It should be noted that it is assumed that the image to which the M models belong is a current frame of image. In this embodiment of this application, when the target anti-aliasing algorithm is determined, the GPU is also rendering a model in the current frame of image. Therefore, after the target anti-aliasing algorithm is determined, some models in the current frame of image have been rendered, or the current frame of image has been rendered.

In a game rendering process, a plurality of frames of images are required within a second, and scenes of adjacent frames of images are similar.

Therefore, after the target anti-aliasing algorithm is determined, when some models in the current frame of image have been rendered, the target anti-aliasing algorithm may be used to process the current frame of image. Alternatively, the target anti-aliasing algorithm may be used to render one or more frames of images following the current frame of image. After the target anti-aliasing algorithm is determined, when the current frame of image has been rendered, one or more frames of images following the current frame of image may also be rendered according to the target anti-aliasing algorithm.

In conclusion, the indication information may indicate the GPU to render the at least one frame of image according to the target anti-aliasing algorithm.

In this embodiment of this application, because the respective rendering information of the M models can reflect a specific scene of the to-be-rendered image to which the M models belong. Therefore, determining the target anti-aliasing algorithm based on the respective rendering information that is of the M models and that is carried in the at least one instruction can implement dynamic selection of the target anti-aliasing algorithm, and obtain the target anti-aliasing algorithm applicable to a current image scene, to improve anti-aliasing effect and image quality.

It can be learned from the foregoing embodiment that there are a plurality of target anti-aliasing algorithm selection methods. The following describes a specific embodiment for this.

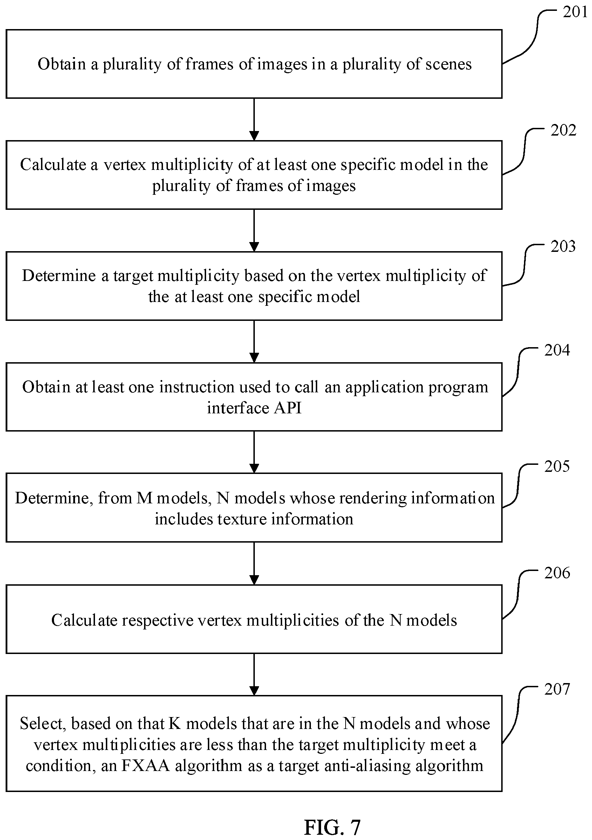

Refer to FIG. 7. This embodiment of this application provides another embodiment of an anti-aliasing algorithm selection method. This embodiment may also be applied to a central processing unit CPU. This embodiment includes:
Step 201: Obtain a plurality of frames of images in a plurality of scenes, where each scene corresponds to at least one frame of image.

It should be noted that the plurality of scenes may be preconfigured, and specific content of the plurality of scenes is not specifically limited in this embodiment of this application. Specific content of the plurality of scenes may be related to a game application, and different game applications correspond to different plurality of scenes.

The plurality of frames of images in the plurality of scenes are used to determine a target multiplicity. Therefore, to ensure that the determined target multiplicity is applicable to selection of a target anti-aliasing algorithm in all scenes in the game application, the plurality of scenes are typical scenes in the game application and can include all main scenes in the game application.

Generally, for a specific game application, a quantity of main scenes is limited. Therefore, several main scenes of the game application may be configured to be the plurality of scenes in the step 201.

The following describes the plurality of scenes by using specific examples. For example, for a wild shooting game application, the plurality of scenes may include a mountain scene, a water scene, a bridge scene, and a room scene; for a tower defense game application, the plurality of scenes may include a base scene, a lane minion scene, a turret scene, and a laner scene.

Each scene corresponds to at least one frame of image. For example, each scene corresponds to a key frame of image. The key frame of image may be understood as a frame of image in which a key action of a character or an object in motion or change is located.

Step 202: Calculate a vertex multiplicity of at least one specific model in the plurality of frames of images.

It should be noted that the vertex multiplicity of the at least one specific model is calculated to determine the target multiplicity, and the target multiplicity is used to select the target anti-aliasing algorithm. Therefore, the at least one specific model may be selected in advance according to the target anti-aliasing algorithm that needs to be selected and with reference to manual experience.

For example, to determine a condition for selecting an FXAA algorithm, at least one specific model is selected based on a model to which the FXAA algorithm is applicable. Specifically, the FXAA algorithm is applicable to a model drawn through mapping. Therefore, a model drawn through texture mapping in a rendering process may be selected as the at least one specific model. For example, one or more of a grass model, a fence model, and a leaf model may be selected as the at least one specific model.

A higher vertex multiplicity of a model indicates more triangles and edges of the model. Based on this, because an MSAA algorithm is applicable to anti-aliasing on an edge of a polygon, and the FXAA algorithm blurs an image, compared with the FXAA algorithm, the MSAA algorithm is more applicable to a rendering process of a model with a higher vertex multiplicity, and the FXAA algorithm is more applicable to a rendering process of a model with a lower vertex multiplicity. Therefore, a model usually with a lower vertex multiplicity may be selected as the at least one specific model. For example, the grass model, the fence model, and the leaf model usually have lower vertex multiplicities, so one or more of the grass model, the fence model, and the leaf model may be selected as the at least one specific model.

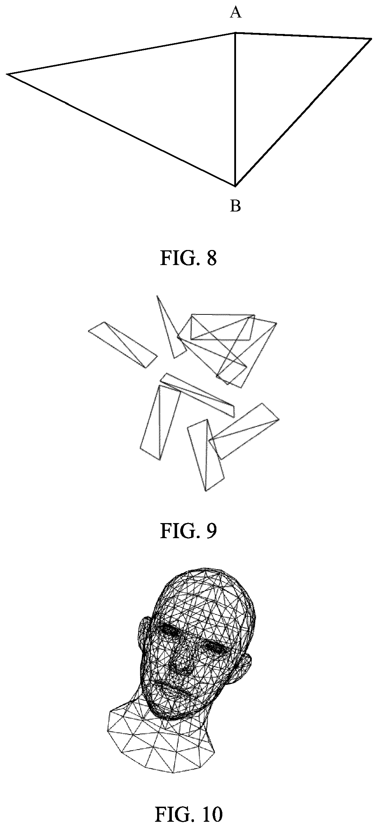

The vertex multiplicity indicates a case in which a vertex in a model is reused. It is assumed that a model is shown in FIG. 8. The model includes two triangles, and one edge of the two triangles overlaps. Therefore, a quantity of vertices included in the model is 4, and two vertices are separately reused once.

There may be a plurality of forms of the vertex multiplicity. This is not specifically limited in this embodiment of this application. In an implementation, the vertex multiplicity may be a quantity of times of vertex reusing in the model. However, a model with a large quantity of vertices necessarily has a high vertex multiplicity. Therefore, in another implementation, the vertex multiplicity may be equal to a proportion of a quantity of times of vertex reusing in a model to a sum, and the sum is a sum of a total quantity of vertices and the quantity of times of vertex reusing.

The following uses specific examples to describe the grass model, the fence model, and the leaf model usually with low vertex multiplicities.

FIG. 9, FIG. 10, and FIG. 11 respectively show a grass model, a human model, and a shoes model. It can be clearly seen by comparing the three figures that the grass model has a lower vertex multiplicity.

Step 203: Determine a target multiplicity based on the vertex multiplicity of the at least one specific model.

It should be noted that there are a plurality of methods for determining the target multiplicity based on the vertex multiplicity of the at least one specific model. This is not limited in this embodiment of this application. In an implementation, the target multiplicity is configured as greater than a vertex multiplicity of any model in the at least one specific model. For example, if the at least one specific model includes two models, and the vertex multiplicities are respectively 30% and 31%, the target multiplicity may be configured as 35%.

The steps 201 to 203 provide a specific solution for determining the target multiplicity, that is, determining the target multiplicity based on a vertex multiplicity of at least one specific model that is selected. The target multiplicity is used in a process of determining a target anti-aliasing algorithm in step 207.

Correspondingly, the steps 201 to 203 need to be performed before the step 207. Specifically, the steps 201 to 203 may be performed when the game is offline, or the steps 201 to 203 may be performed before a user selects anti-aliasing but during running of the game. This is not specifically limited in this embodiment of this application.

It should be noted that, in addition to the foregoing method for determining the target multiplicity, another method such as directly configuring the target multiplicity may alternatively be used to determine the target multiplicity. Therefore, in this embodiment of this application, the steps 201 to 203 are optional.

The following steps 204 to 207 are performed during running of the game.

Step 204: Obtain at least one instruction used to call an application program interface API, where the at least one instruction carries respective rendering information of M models, the M models belong to a same frame of image, and M is a positive integer.

It can be learned from the related description of the step 101 that the obtained instruction may include an instruction for binding a model to texture data.

It may be understood that, in a rendering process of a model, the model may usually be shaded by using two methods.

In a first shading method, texture data is used to shade the model, also known as drawing through texture mapping. Accordingly, before rendering, the instruction that is for binding the texture data to the model and that needs to be sent. When the instruction is obtained, rendering information includes texture information, and the texture information indicates that the texture data is used in a process of rendering the model.

In a second shading method, the model is shaded by configuring a color of a pixel, that is, configuring each pixel in the model as a color. Correspondingly, resource data sent by the CPU to a GPU includes color data of each vertex and each pixel in the model. In this case, the CPU does not send the instruction for binding the texture data to the model, and therefore cannot obtain the instruction for binding the texture data to the model. Correspondingly, rendering information of the model does not include texture information.

Other content of the step 204 in this embodiment of this application is similar to the step 101 in the foregoing embodiment. For understanding the step 204 in this embodiment of this application in detail, refer to the related description of the step 101 in the foregoing embodiment.

The following describes a specific process of selecting a target anti-aliasing algorithm by using the steps 204 to 207. In this embodiment of this application, a plurality of anti-aliasing algorithms include a fast approximate anti-aliasing FXAA algorithm. Correspondingly, the step 102 in the foregoing embodiment may include the steps 204 to 207.

Step 205: Determine, from the M models, N models whose rendering information includes texture information, where the texture information indicates that texture data is used in a model rendering process, and N is a positive integer less than or equal to M.

It can be learned from the related description in the step 204 that, if a model needs to be shaded based on texture data, rendering information of the model includes texture information. If a model does not need to be shaded based on texture data, rendering information of the model does not include texture information.

Therefore, the N models including the texture information may be obtained by screening from the M models. The N models may be all M models. In this case, N is equal to M. Alternatively, the N models may be some of the M models. In this case, N is less than M.

Step 206: Calculate respective vertex multiplicities of the N models.

It can be learned from the related description in the step 202 that a vertex multiplicity of a model may be represented by a quantity of times of vertex reusing, or may be calculated based on a total quantity of vertices and the quantity of times of vertex reusing, that is, the vertex multiplicity = the quantity of times of vertex reusing/(the total quantity of vertices + the quantity of times of vertex reusing).

It may be understood that, if a reused vertex and a quantity of times of reusing each reused vertex are determined based on vertex data of a model, there is a large amount of calculation. Therefore, an embodiment of this application provides another manner of calculating the vertex multiplicity, which is described below.

For example, the N models include a target model, that is, the target model is one of the N models, and rendering information of the target model further includes an element buffer object EBO corresponding to the target model. For understanding the EBO, refer to the related description in the step 101.

Calculating the respective vertex multiplicities of the N models based on the foregoing condition includes:
obtaining, from the EBO corresponding to the target model, a quantity of vertex indexes and a quantity of vertex index key values corresponding to the target model; and calculating a vertex multiplicity of the target model based on the quantity of vertex indexes and the quantity of vertex index key values, where the vertex multiplicity of the target model is a proportion of a target difference to the quantity of vertex indexes, and the target difference is equal to a difference between the quantity of vertex indexes and the quantity of vertex index key values.

The following describes a process of calculating a vertex multiplicity of a model with reference to FIG. 9 to FIG. 11.

For the model shown in FIG. 9, a vertex index in the EBO includes: [0, 1, 2, 3, 4, 5, 6, 4, 3, 7, 8, 9, 8, 7, 10, 11, 12, 13, 12, 11, 14, 15, 16, 17, 17, 18, 15, 19, 20, 21, 22, 20, 19, 23, 24, 25, 24, 23, 26, 27, 28, 29, 29, 30, 27, 31, 32, 33, 33, 34, 311. Each index value may also be referred to as a vertex index key value, and represents a storage location of a vertex, and vertex data may be obtained from a corresponding VBO based on the vertex index value.

For the vertex index of the model shown in FIG. 9, a quantity of vertex indexes is 51, and a vertex index key value may be 0 to 34. Therefore, a quantity of vertex index key values is 35. Correspondingly, a quantity of times of vertex reusing is 51 - 35 = 16, and the model has a vertex multiplicity = 16/51 = 31.4%.

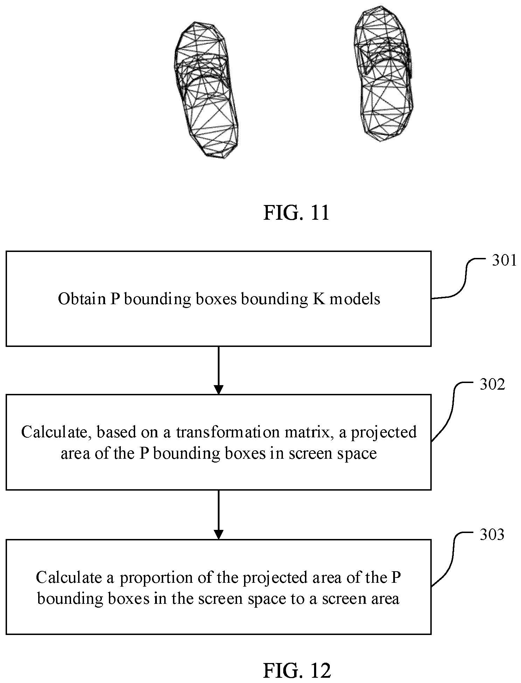

The same method is used to calculate vertex multiplicities of the models shown in FIG. 10 and FIG. 11.

For the model shown in FIG. 10, a quantity of vertex indexes is 4669, and a quantity of vertex index key values is 877. Correspondingly, the model has a vertex multiplicity = (4669 - 877)/4669 = 81.2%.

For the model shown in FIG. 11, a quantity of vertex indexes is 1002, and a quantity of vertex index key values is 254. Correspondingly, the model has a vertex multiplicity = (1002 - 254)/4669 = 74.6%.

It can be learned from the foregoing data that the vertex multiplicity of the grass model shown in FIG. 9 is significantly lower than the vertex multiplicities of the models shown in FIG. 10 and FIG. 11.

In this embodiment of this application, compared with calculating a vertex multiplicity based on vertex data, calculating a vertex multiplicity based on a quantity of vertex indexes and a quantity of vertex index key values has a smaller calculation amount and a simplified calculation process, thereby improving efficiency of selecting a target anti-aliasing algorithm.

Step 207: Select, based on that K models that are in the N models and whose vertex multiplicities are less than the target multiplicity meet a condition, the FXAA algorithm as the target anti-aliasing algorithm, where K is a positive integer less than or equal to N.

It can be learned from the related description of the at least one specific model in the step 203 that the FXAA algorithm is applicable to a rendering process of a model that is drawn through texture mapping and whose vertex multiplicity is low.

Therefore, in this embodiment of this application, the N models drawn through texture mapping are first obtained by screening from the M models, and then the K models whose vertex multiplicities are less than the target multiplicity are obtained by screening from the N models. Finally, the target anti-aliasing algorithm is selected based on the K models and a preconfigured condition.

There may be a plurality of preconfigured conditions. This is not specifically limited in this embodiment of this application.

In an implementation, the preconfigured condition may be a model quantity threshold.

It may be understood that, even if there are a large quantity of K models, if sizes of the K models in screen space are small, regardless that anti-aliasing algorithm is selected to process the K models, anti-aliasing effect of the K models is not greatly affected.

In another implementation, the condition includes that a proportion of a projected area of the K models in the screen space to a screen area is greater than a target proportion.

It may be understood that a larger size of the K models in the screen space indicates a greater impact on display effect of the frame of image to which the K models belong. The FXAA algorithm is applicable to a rendering process of the K models. Therefore, when the proportion of the projected area of the K models in the screen space to the screen area is greater than the target proportion, the FXAA algorithm is selected as the target anti-aliasing algorithm, to greatly improve anti-aliasing effect of the entire frame of image.

The target proportion may be configured based on experience, a type of the game application, and a specific game scene. For example, the target proportion may be configured as 1/3, 2/5, or 1/2.

Correspondingly, after the step 206 and before the step 207, the method further includes: calculating the proportion of the projected area of the K models in the screen space to the screen area.

There are a plurality of methods for calculating the proportion of the projected area of the K models in the screen space to the screen area. This is not specifically limited in this embodiment of this application. The following describes this in detail.

In an implementation, as shown in FIG. 12, calculating the proportion of the projected area of the K models in the screen space to the screen area includes:
Step 301: Obtain P bounding boxes bounding the K models, where each bounding box is a geometry bounding at least one of the K models.

For a model, a bounding box is a geometry bounding the model in model space. For the same model, there may be a plurality of types of bounding boxes, as long as the bounding boxes can bound the model. Therefore, a structure of the P bounding boxes is not specifically limited in this embodiment of this application.

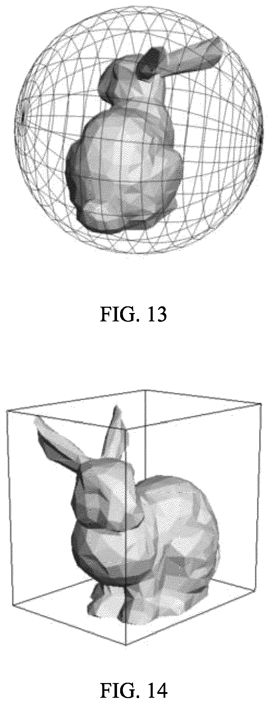

For example, for a rabbit model, a bounding box may be shown in FIG. 13, that is, the bounding box is a sphere. Alternatively, a bounding box may be shown in FIG. 14, that is, the bounding box is a cube.

The following describes a correspondence between the K models and the P bounding boxes.

A bounding box may correspond to a model, that is, a bounding box bounds a model. As shown in FIG. 12 and FIG. 13, the bounding box bounds only one rabbit model.

Alternatively, one bounding box may correspond to a plurality of models. For example, in model space, two models are close to each other or even overlap. In this case, a bounding box that bounds the two models may be determined.

It should be noted that a model may correspond to a plurality of bounding boxes. Therefore, there are a plurality of methods for obtaining the P bounding boxes. For example, the respective rendering information of the M models further includes respective vertex buffer objects VBOs corresponding to the M models. For understanding the VBO in detail, refer to the related description of the step 101 in the foregoing embodiment.

Based on this, obtaining the P bounding boxes bounding the K models includes:
obtaining, from respective vertex buffer objects VBOs corresponding to the K models, respective vertex data corresponding to the M models, and determining the P bounding boxes based on respective vertex data corresponding to the K models.

The vertex data may include vertex coordinates and a vertex normal vector.

It may be understood that a maximum coordinate value and a minimum coordinate value corresponding to each model in each direction may be determined based on respective vertex coordinates of the K models. This is equivalent to determining an edge of the model, and the P bounding boxes may be obtained based on the maximum coordinate value and the minimum coordinate value corresponding to each model in each direction.

Step 302: Calculate, based on a transformation matrix, a projected area of the P bounding boxes in the screen space, where the transformation matrix is used to project the P bounding boxes from the model space to the screen space.

The model space is also called object space or local space. In the model space, each model has its own independent coordinate space. When the model moves or rotates, the model space also moves and rotates with it.

The screen space is two-dimensional space. Vertex coordinates of a model can be projected to the screen space to obtain corresponding two-dimensional coordinates.

The transformation matrix is used to project (also referred to as transform) a model in the model space to the screen space.

Any two bounding boxes in the P bounding boxes may correspond to a same transformation matrix, or may correspond to different transformation matrices. Therefore, the P bounding boxes may be projected, based on one or more transformation matrices, from the model space to the screen space.

It should be noted that calculating the projected area of the P bounding boxes in the screen space is a mature technology, and details are not described in this embodiment of this application.

Step 303: Calculate a proportion of the projected area of the P bounding boxes in the screen space to the screen area, and use the proportion of the projected area of the P bounding boxes in the screen space to the screen area as the proportion of the projected area of the K models in the screen space to the screen area.

It may be understood that a model is usually an irregular geometry. Therefore, if a proportion of a projected area of the model in the screen space to the screen area is directly calculated, a calculation process is complicated.

In this embodiment of this application, the P bounding boxes bounding the K models are first obtained, and then the proportion of the projected area of the P bounding boxes in the screen space to the screen area is calculated, and the proportion of the projected area of the P bounding boxes in the screen space to the screen area is used as an approximate value of the proportion of the projected area of the K models in the screen space to the screen area. This can simplify a proportion calculation process and improve proportion calculation effect, thereby improving efficiency of determining the target anti-aliasing algorithm.

It can be learned from the descriptions of the foregoing embodiments that, for a frame of image, as long as in all models included in the frame of image, there are K models that use texture data and whose vertex multiplicities are less than a target multiplicity, and the K models meet a preconfigured condition, the FXAA algorithm can be used as the target anti-aliasing algorithm.

However, a process of obtaining the instruction calling the graphics API is a continuous process. Therefore, after some instructions are obtained, it may be determined, based on information about models included in these instructions, whether there are the K models that meet the preconfigured condition. If yes, the FXAA algorithm may be selected as the target anti-aliasing algorithm. If no, the instruction calling the graphics API may continue to be obtained for further determination.

Therefore, the M models may be all models in the image to which the M models belong, or may be some of all models in the image to which the M models belong.

For example, 100 models need to be rendered for rendering one frame of image. After rendering information of 20 models is obtained, it may be determined, based on the rendering information of the 20 models, whether K models meet a preconfigured condition exist. In this case, M is 20. If not, rendering information of models may continue to be obtained. After rendering information of 30 models is obtained, it is determined, based on the rendering information of the 30 models, whether K models meet the preconfigured condition exist. In this case, M is 30. The foregoing process is repeated until when M is 100, determination is performed for one more time. In this case, if there are K models that meet the preconfigured condition, the FXAA algorithm is selected as the target anti-aliasing algorithm.

It may be understood that, when the M models are all models in the image to which the M models belong, if there are still no K models that meet the condition, the FXAA algorithm may not be selected as the target anti-aliasing algorithm, and another algorithm may be selected as the target anti-aliasing algorithm. This is described in detail below.

For example, the M models are all models in the image to which the M models belong, and the plurality of anti-aliasing algorithms further include a multisampling anti-aliasing MSAA algorithm.

Selecting, based on the respective rendering information of the M models, an anti-aliasing algorithm from the plurality of anti-aliasing algorithms as the target anti-aliasing algorithm further includes:
selecting, based on that K models that are in the N models and whose vertex multiplicities are less than a target multiplicity do not meet the condition, the MSAA algorithm as the target anti-aliasing algorithm, where K is a positive integer less than or equal to N.

It may be understood that if K models that are in the N models and whose vertex multiplicities are less than the target multiplicity do not meet the condition, it means that the K models whose texture data is used and whose vertex multiplicities are low do not meet the condition. The FXAA algorithm is not applicable to a scene of the current image. Correspondingly, it indicates that there are many models with high multiplicities or models that are not applicable to texture data in the M models. It can be learned from the related description of the step 202 that in this case, the MSAA algorithm may be selected as the target anti-aliasing algorithm.

The FXAA algorithm and the MSAA algorithm are two anti-aliasing algorithms with high applicability. Therefore, in this embodiment of this application, whether the FXAA algorithm is applicable to the scene of the current image is first determined based on the rendering information of the M models. If the FXAA algorithm is applicable, the FXAA algorithm is selected as the target anti-aliasing algorithm; or if the FXAA algorithm is not applicable, the MSAA algorithm is selected as the target anti-aliasing algorithm. The FXAA algorithm and MSAA algorithm can be continually switched based on different scenes to improve anti-aliasing effect of game applications.

To facilitate understanding of the anti-aliasing algorithm selection method provided in embodiments of this application, the following provides a specific application example.

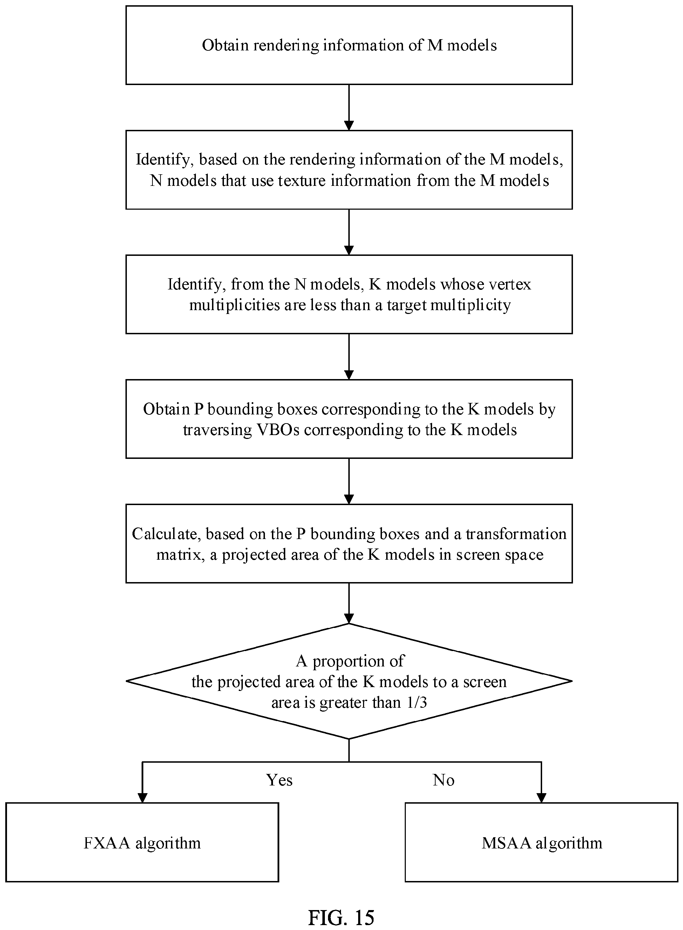

As shown in FIG. 15, a game running phase in a scene of the application example specifically includes the following steps.

Step 1: Obtain rendering information of M models. For a specific obtaining process, refer to the related descriptions in the step 101 and the step 204.

Step 2: Identify, based on the rendering information of the M models, N models that use texture information from the M models. For a specific identification process, refer to the related description in step 205.

Step 3: Identify, from the N models, K models whose vertex multiplicities are less than a target multiplicity. For a specific identification process, refer to the related description in step 206.

Step 4: Obtain P bounding boxes corresponding to the K models by traversing VBOs corresponding to the K models. For details, refer to the related description in step 301.

Step 5: Calculate, based on the P bounding boxes and a transformation matrix, a projected area of the K models in screen space. For details, refer to the related description in step 302.

Step 6: Determine whether a proportion of the projected area of the K models in the screen space to a screen area is greater than 1/3. When the proportion is greater than 1/3, an FXAA algorithm is selected as a target anti-aliasing algorithm. When the proportion is less than 1/3, an MSAA algorithm is selected as a target anti-aliasing algorithm.

The following describes effect of the anti-aliasing algorithm selection method in embodiments of this application based on a specific image in a game.

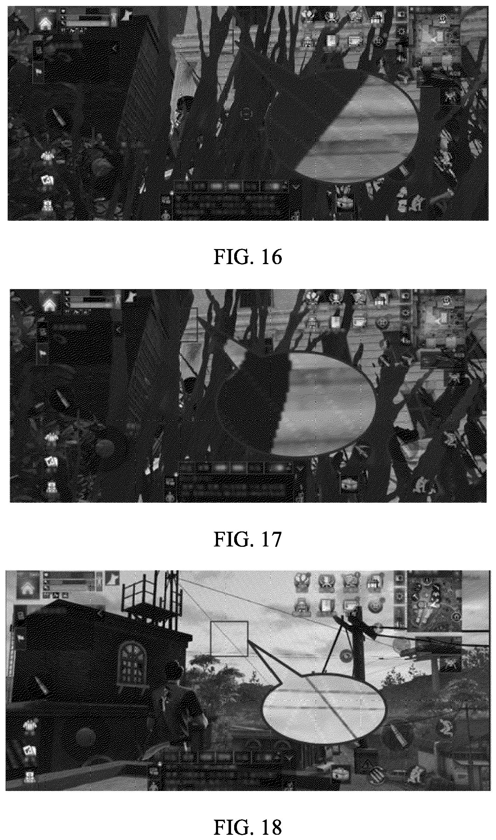

Specifically, the anti-aliasing algorithm selection method in embodiments of this application is applied to a game application. For a first scene, because grass and the like models that are drawn through mapping and that have low vertex multiplicities account for a large proportion of a screen, the FXAA algorithm is selected as the target anti-aliasing algorithm, and an image obtained after anti-aliasing according to the FXAA algorithm is shown in FIG. 16. For a second scene, because grass and the like models that are drawn through mapping and that have low vertex multiplicities account for a small proportion of the screen, the MSAA algorithm is selected as the target anti-aliasing algorithm, and an image obtained after anti-aliasing according to the MSAA algorithm is shown in FIG. 17.

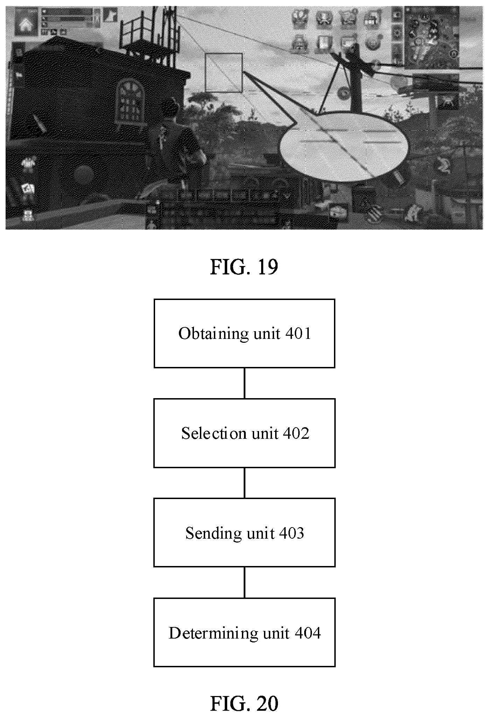

To experience anti-aliasing effect in embodiments of this application, an applicant performs a comparative experiment: Anti-aliasing is performed on a first scene according to the MSAA algorithm, to obtain an image shown in FIG. 18. Anti-aliasing is performed on a second scene according to the FXAA algorithm, to obtain an image shown in FIG. 19.

It can be learned from comparison between FIG. 16 and FIG. 18 that, in an image obtained by performing anti-aliasing according to the FXAA algorithm in embodiments of this application, an edge of grass has smaller j aggies, and image quality is better. However, in an image obtained by performing anti-aliasing according to the MSAA algorithm, an edge of the grass has larger jaggies, and image quality is worse.

Similarly, it can be learned from comparison between FIG. 17 and FIG. 19 that, in an image obtained by performing anti-aliasing according to the MSAA algorithm in embodiments of this application, an edge of a wire has smaller jaggies, and image quality is better. However, in an image obtained by performing anti-aliasing according to the FXAA algorithm, an edge of the wire has larger jaggies, and image quality is worse.

Refer to FIG. 20. An embodiment of this application further provides an embodiment of an anti-aliasing algorithm selection apparatus, including:
an obtaining unit 401, configured to obtain at least one instruction used to call an application program interface API, where the at least one instruction carries respective rendering information of M models, the M models belong to a same frame of image, and M is a positive integer;
a selection unit 402, configured to: select, based on the respective rendering information of the M models, an anti-aliasing algorithm from a plurality of anti-aliasing algorithms as a target anti-aliasing algorithm; and
a sending unit 403, configured to send indication information to a graphics processing unit GPU, where the indication information indicates the GPU to render at least one frame of image according to the target anti-aliasing algorithm.

In an implementation, the plurality of anti-aliasing algorithms include a fast approximate anti-aliasing FXAA algorithm. The selection unit 402 is configured to: determine, from the M models, N models whose rendering information includes texture information, where the texture information indicates that texture data is used in a model rendering process, and N is a positive integer less than or equal to M; calculate respective vertex multiplicities of the N models; and select, based on that K models that are in the N models and whose vertex multiplicities are less than a target multiplicity meet a condition, the FXAA algorithm as the target anti-aliasing algorithm, where K is a positive integer less than or equal to N.

In an implementation, the condition includes that a proportion of a projected area of the K models in screen space to a screen area is greater than a target proportion.

In an implementation, the selection unit 402 is further configured to calculate the proportion of the projected area of the K models in the screen space to the screen area.

In an implementation, the selection unit 402 is configured to: obtain P bounding boxes bounding the K models, where each bounding box is a geometry bounding at least one of the K models; calculate, based on a transformation matrix, a projected area of the P bounding boxes in the screen space, where the transformation matrix is used to project the P bounding boxes from model space to the screen space; and calculate a proportion of the projected area of the P bounding boxes in the screen space to the screen area, and use the proportion of the projected area of the P bounding boxes in the screen space to the screen area as the proportion of the projected area of the K models in the screen space to the screen area.

In an implementation, the respective rendering information of the M models further includes respective vertex buffer objects VBOs corresponding to the M models; and the selection unit 402 is configured to: obtain, from respective vertex buffer objects VBOs corresponding to the K models, respective vertex data corresponding to the K models; and determine the P bounding boxes based on the respective vertex data corresponding to the K models.

In an implementation, the N models include a target model, and rendering information of the target model further includes an element buffer object EBO corresponding to the target model. The selection unit 402 is configured to: obtain, from the EBO corresponding to the target model, a quantity of vertex indexes and a quantity of vertex index key values corresponding to the target model; and calculate a vertex multiplicity of the target model based on the quantity of vertex indexes and the quantity of vertex index key values, where the vertex multiplicity of the target model is a proportion of a target difference to the quantity of vertex indexes, and the target difference is equal to a difference between the quantity of vertex indexes and the quantity of vertex index key values.

In an implementation, the M models are all models in an image to which the M models belong, and the plurality of anti-aliasing algorithms further include a multisampling anti-aliasing MSAA algorithm. The selection unit 402 is further configured to: select, based on that K models that are in the N models and whose vertex multiplicities are less than a target multiplicity do not meet the condition, the MSAA algorithm as the target anti-aliasing algorithm, where K is a positive integer less than or equal to N.

In an implementation, the apparatus further includes a determining unit 404, configured to: obtain a plurality of frames of images in a plurality of scenes, where each scene corresponds to at least one frame of image; calculate a vertex multiplicity of at least one model in the plurality of frames of images; and determine the target multiplicity based on the vertex multiplicity of the at least one model.

For specific implementations, related descriptions, and technical effect of the foregoing units, refer to descriptions in the method part of embodiments of this application.

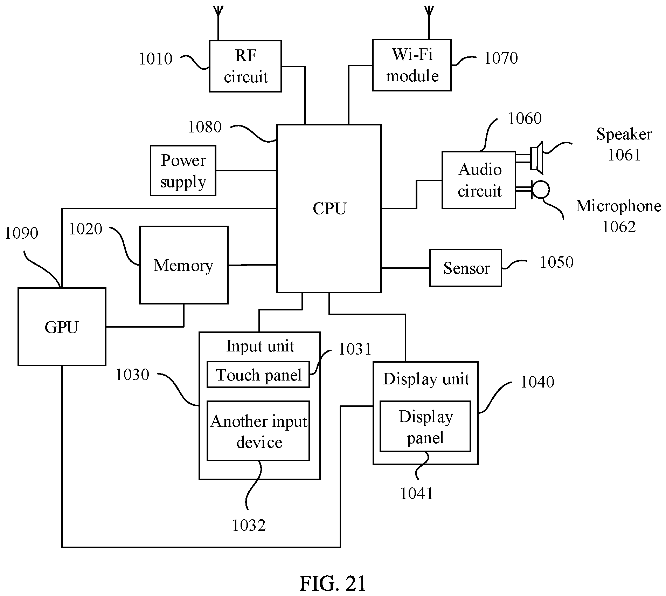

As shown in FIG. 21, an embodiment of this application further provides another terminal device. For ease of description, only a part related to this embodiment of this application is described. For specific technical details that are not disclosed, refer to the method part in embodiments of this application. The terminal may be any terminal device, including: a mobile phone, a tablet computer, a personal digital assistant (English full name: Personal Digital Assistant, English acronym: PDA), a point of sales (English full name: Point of Sales, English acronym: POS), a vehicle-mounted computer, or the like, and for example, the terminal is a mobile phone.

FIG. 21 is a block diagram of a partial structure of a mobile phone related to the terminal according to this embodiment of this application. Refer to FIG. 21. The mobile phone includes: components such as a radio frequency (English full name: Radio Frequency, English acronym: RF) circuit 1010, a memory 1020, an input unit 1030, a display unit 1040, a sensor 1050, an audio circuit 1060, a wireless fidelity (English full name: wireless fidelity, English acronym: Wi-Fi) module 1070, a central processing unit CPU 1080, a graphics processing unit GPU 1090, and a power supply. A person skilled in the art may understand that the structure of the mobile phone shown in FIG. 21 does not constitute a limitation on the mobile phone, and the mobile phone may include more or fewer components than those shown in the figure, or a combination of some components, or components differently disposed.

The following describes each component of the mobile phone in detail with reference to FIG. 21.

The RF circuit 1010 may be configured to receive and send signals during an information receiving and sending process or a call process. Particularly, the RF circuit 1010 receives downlink information from a base station, then delivers the downlink information to the CPU 1080 for processing, and sends designed uplink data to the base station. Generally, the RF circuit 1010 includes but is not limited to an antenna, at least one amplifier, a transceiver, a coupler, a low noise amplifier (English full name: Low Noise Amplifier, English acronym: LNA), a duplexer, and the like. In addition, the RF circuit 1010 may further communicate with a network and another device through wireless communication. Any communication standard or protocol may be used for the foregoing wireless communication, including but not limited to a global system for mobile communication (English full name: Global System for Mobile communication, English acronym: GSM), a general packet radio service (English full name: General Packet Radio Service, GPRS), code division multiple access (English full name: Code Division Multiple Access, English acronym: CDMA), wideband code division multiple access (English full name: Wideband Code Division Multiple Access, English acronym: WCDMA), long term evolution (English full name: Long Term Evolution, English acronym: LTE), an email, a short message service (English full name: Short Message Service, SMS), and the like.

The memory 1020 may be configured to store a software program and module. The CPU 1080 runs the software program and module stored in the memory 1020, to implement various functional applications and data processing of the mobile phone. The memory 1020 may mainly include a program storage area and a data storage area. The program storage area may store an operating system, an application program required by at least one function (such as a sound playback function and an image display function), and the like. The data storage area may store data (such as audio data and an address book) created according to use of the mobile phone, and the like. In addition, the memory 1020 may include a high-speed random access memory, and may also include a non-volatile memory such as at least one disk storage device, a flash storage device, or another volatile solid-state storage device.

The input unit 1030 may be configured to receive input digit or character information, and generate a keyboard signal input related to the user setting and function control of the mobile phone. Specifically, the input unit 1030 may include a touch panel 1031 and another input device 1032. The touch panel 1031, also referred to as a touchscreen, may collect a touch operation of a user on or near the touch panel 1031 (such as an operation of a user on the touch panel 1031 or near the touch panel 1031 by using any suitable object or accessory such as a finger or a stylus), and drive a corresponding connection apparatus according to a preset program. Optionally, the touch panel 1031 may include two parts: a touch detection apparatus and a touch controller. The touch detection apparatus detects a touch position of the user, detects a signal generated by a touch operation, and transmits the signal to the touch controller; the touch controller receives touch information from the touch detection apparatus, converts the information into contact coordinates, sends the coordinates to the CPU 1080, and receives and executes a command sent from the CPU 1080. In addition, the touch panel 1031 may be a resistive, capacitive, infrared, or surface sound wave type touch panel. Besides the touch panel 1031, the input unit 1030 may further include the another input device 1032. Specifically, the another input device 1032 may include, but is not limited to, one or more of a physical keyboard, a functional key (such as a volume control key or a switch key), a trackball, a mouse, and a joystick.

The display unit 1040 may be configured to display information input by the user or information provided for the user, and various menus of the mobile phone. The display unit 1040 may include a display panel 1041. Optionally, the display panel 1041 may be configured by using a liquid crystal display (English full name: Liquid Crystal Display, English acronym: LCD), an organic light-emitting diode (English full name: Organic Light-Emitting Diode, English acronym: OLED), or the like. Further, the touch panel 1031 may cover the display panel 1041. When detecting a touch operation on or near the touch panel 1031, the touch panel 1031 transmits the touch operation to the CPU 1080 to determine a type of a touch event, and then the CPU 1080 provides corresponding visual output on the display panel 1041 based on the type of the touch event. Although, in FIG. 21, the touch panel 1031 and the display panel 1041 are used as two separate parts to implement input and output functions of the mobile phone, in some embodiments, the touch panel 1031 and the display panel 1041 may be integrated to implement the input and output functions of the mobile phone.

The mobile phone may further include at least one sensor 1050 such as an optical sensor, a motion sensor, and other sensors. Specifically, the light sensor may include an ambient light sensor and a proximity sensor. The ambient light sensor may adjust luminance of the display panel 1041 based on brightness of ambient light. The proximity sensor may turn off the display panel 1041 and/or backlight when the mobile phone approaches to an ear. As a type of movement sensor, an accelerometer sensor may detect a value of acceleration in each direction (usually on three axes), may detect a value and a direction of gravity in a stationary state, and may be used in an application for identifying a mobile phone posture (such as screen switching between a landscape mode and a portrait mode, a related game, or magnetometer posture calibration), a function related to vibration identification (such as a pedometer or a knock), or the like. Other sensors such as a gyroscope, a barometer, a hygrometer, a thermometer, or an infrared sensor may be further configured in the mobile phone. Details are not described herein.

The audio circuit 1060, a speaker 1061, and a microphone 1062 may provide audio interfaces between the user and the mobile phone. The audio circuit 1060 may transmit, to the speaker 1061, an electric signal converted from received audio data. The speaker 1061 converts the electric signal into a sound signal for output. On the other hand, the microphone 1062 converts a collected sound signal into an electric signal. The audio circuit 1060 receives the electric signal and converts the electric signal into audio data, and outputs the audio data to the CPU 1080 for processing. Then, the CPU 1080 sends the audio data to, for example, another mobile phone through the RF circuit 1010, or outputs the audio data to the memory 1020 for further processing.

Wi-Fi belongs to a short distance wireless transmission technology. The mobile phone may help, by using a Wi-Fi module 1070, the user to receive and send e-mails, browse a web page, access streaming media, and so on, which provides wireless broadband Internet access for the user. Although FIG. 21 shows the Wi-Fi module 1070, it may be understood that the Wi-Fi module 1070 is not a necessary component of the mobile phone, and when required, the Wi-Fi module 1070 may be omitted as long as the scope of the essence of the present invention is not changed.

The CPU 1080, being a control center of the mobile phone, connects each part of the entire mobile phone by using various interfaces and lines, executes various functions of the mobile phone and processes data through running or executing software programs and/or modules stored in the memory 1020 and invoking data stored in the memory 1020, to perform entire monitoring on the mobile phone. Optionally, the CPU 1080 may include one or more processing units. Preferably, an application processor and a modem processor may be integrated into the CPU 1080. The application processor mainly processes an operating system, a user interface, an application, and the like. The modem processor mainly processes wireless communication. It may be understood that the foregoing modem processor may not be integrated into the CPU 1080.

The GPU 1090 is mainly configured to render data in the memory 1020 into an image, and display the image in the display unit 1040.

The mobile phone further includes a power supply (such as a battery) that supplies power to all the components. Preferably, the power supply may be logically connected to the CPU 1080 by using a power management system, to implement, by using the power management system, functions such as management of charging, discharging, and power consumption.

Although not shown, the mobile phone may further include a camera, a Bluetooth module, and the like. Details are not described herein.

In this embodiment of this application, the CPU 1080 included in the terminal further has the following functions:
obtaining at least one instruction used to call an application program interface API, where the at least one instruction carries respective rendering information of M models, the M models belong to a same frame of image, and M is a positive integer;
selecting, based on the respective rendering information of the M models, an anti-aliasing algorithm from a plurality of anti-aliasing algorithms as a target anti-aliasing algorithm; and
sending indication information to a graphics processing unit GPU, where the indication information indicates the GPU to render at least one frame of image according to the target anti-aliasing algorithm.

In this embodiment of this application, the GPU 1090 included in the terminal further has the following functions:
receiving the indication information from the CPU 1080, and performing anti-aliasing in an image rendering process according to a target anti-aliasing algorithm based on the indication information.

An embodiment of this application further provides a chip, including one or more processors. Some or all of the processors are configured to read and execute a computer program stored in a memory, to perform the method in the embodiments corresponding to FIG. 6, FIG. 7, and FIG. 12.

Optionally, the chip includes the memory, and the memory and the processor are connected to the memory by using a circuit or a wire. Further optionally, the chip further includes a communication interface, and the processor is connected to the communication interface. The communication interface is configured to receive data or information or both that need to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of this application may be implemented by one chip, or may be cooperatively implemented by a plurality of chips.

An embodiment of this application further provides a computer storage medium. The computer storage medium is configured to store computer software instructions used by the foregoing computer device, and the computer software instructions include a program designed for execution by the computer device.

The computer device may be the apparatus for running an application described in FIG. 15.

An embodiment of this application further provides a computer program product. The computer program product includes computer software instructions. The computer software instructions may be loaded by a processor to implement a procedure of the method shown in FIG. 6, FIG. 7, and FIG. 12.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. An anti-aliasing algorithm selection method, comprising:
obtaining at least one instruction used to call an application program interface API, wherein the at least one instruction carries respective rendering information of M models, the M models belong to a same frame of image, and M is a positive integer;
selecting, based on the respective rendering information of the M models, an anti-aliasing algorithm from a plurality of anti-aliasing algorithms as a target anti-aliasing algorithm; and
sending indication information to a graphics processing unit GPU, wherein the indication information indicates the GPU to render at least one frame of image according to the target anti-aliasing algorithm.

2. The method according to claim 1, wherein the plurality of anti-aliasing algorithms comprise a fast approximate anti-aliasing FXAA algorithm; and
the selecting, based on the respective rendering information of the M models, an anti-aliasing algorithm from a plurality of anti-aliasing algorithms as a target anti-aliasing algorithm comprises:
determining, from the M models, N models whose rendering information comprises texture information, wherein the texture information indicates that texture data is used in a model rendering process, and N is a positive integer less than or equal to M;
calculating respective vertex multiplicities of the N models; and
selecting, based on that K models that are in the N models and whose vertex multiplicities are less than a target multiplicity meet a condition, the FXAA algorithm as the target anti-aliasing algorithm, wherein K is a positive integer less than or equal to N.

3. The method according to claim 2, wherein the condition comprises that a proportion of a projected area of the K models in screen space to a screen area is greater than a target proportion.

4. The method according to claim 2 or 3, wherein after the calculating respective vertex multiplicities of the N models, and before the selecting, based on that K models that are in the N models and whose vertex multiplicities are less than a target multiplicity meet a condition, the FXAA algorithm as the target anti-aliasing algorithm, the method further comprises:
calculating the proportion of the projected area of the K models in the screen space to the screen area.

5. The method according to claim 4, wherein the calculating the proportion of the projected area of the K models in the screen space to the screen area comprises:
obtaining P bounding boxes bounding the K models, wherein each bounding box is a geometry bounding at least one of the K models;
calculating, based on a transformation matrix, a projected area of the P bounding boxes in the screen space, wherein the transformation matrix is used to project the P bounding boxes from model space to the screen space; and
calculating a proportion of the projected area of the P bounding boxes in the screen space to the screen area, and using the proportion of the projected area of the P bounding boxes in the screen space to the screen area as the proportion of the projected area of the K models in the screen space to the screen area.

6. The method according to claim 5, wherein the respective rendering information of the M models further comprises respective vertex buffer objects VBOs corresponding to the M models; and
the obtaining P bounding boxes bounding the K models comprises:
obtaining, from respective vertex buffer objects VBOs corresponding to the K models, respective vertex data corresponding to the K models; and
determining the P bounding boxes based on the respective vertex data corresponding to the K models.

7. The method according to any one of claims 2 to 6, wherein the N models comprise a target model, and rendering information of the target model further comprises an element buffer object EBO corresponding to the target model; and
the calculating respective vertex multiplicities of the N models comprises:
obtaining, from the EBO corresponding to the target model, a quantity of vertex indexes and a quantity of vertex index key values corresponding to the target model; and
calculating a vertex multiplicity of the target model based on the quantity of vertex indexes and the quantity of vertex index key values, wherein the vertex multiplicity of the target model is a proportion of a target difference to the quantity of vertex indexes, and the target difference is equal to a difference between the quantity of vertex indexes and the quantity of vertex index key values.

8. The method according to any one of claims 2 to 7, wherein the M models are all models in an image to which the M models belong, and the plurality of anti-aliasing algorithms further comprise a multisampling anti-aliasing MSAA algorithm; and
the selecting, based on the respective rendering information of the M models, an anti-aliasing algorithm from a plurality of anti-aliasing algorithms as a target anti-aliasing algorithm further comprises:
selecting, based on that K models that are in the N models and whose vertex multiplicities are less than the target multiplicity do not meet the condition, the MSAA algorithm as the target anti-aliasing algorithm, wherein K is a positive integer less than or equal to N.

9. The method according to any one of claims 2 to 8, wherein before the selecting, based on that K models that are in the N models and whose vertex multiplicities are less than a target multiplicity meet a condition, the FXAA algorithm as the target anti-aliasing algorithm, the method further comprises:
obtaining a plurality of frames of images in a plurality of scenes, wherein each scene corresponds to at least one frame of image;
calculating a vertex multiplicity of at least one model in the plurality of frames of images; and
determining the target multiplicity based on the vertex multiplicity of the at least one model.

10. An anti-aliasing algorithm selection apparatus, comprising:
an obtaining unit, configured to obtain at least one instruction used to call an application program interface API, wherein the at least one instruction carries respective rendering information of M models, the M models belong to a same frame of image, and M is a positive integer;
a selection unit, configured to: select, based on the respective rendering information of the M models, an anti-aliasing algorithm from a plurality of anti-aliasing algorithms as a target anti-aliasing algorithm; and
a sending unit, configured to send indication information to a graphics processing unit GPU, wherein the indication information indicates the GPU to render at least one frame of image according to the target anti-aliasing algorithm.

11. A terminal device, comprising one or more processors and a memory, wherein the memory stores computer-readable instructions;
the one or more processors read the computer-readable instructions, and the terminar device is enabled to implement the method according to any one of claims 1 to 9.

12. A computer-readable storage medium, comprising computer-readable instructions, wherein when the computer-readable instructions are run on a computer, the computer is enabled to perform the method according to any one of claims 1 to 9.

13. A computer program product, comprising computer-readable instructions, wherein when the computer-readable instructions are run on a computer, the computer is enabled to perform the method according to any one of claims 1 to 9.
